# EUROPEAN PATENT APPLICATION

(11) **EP 2 088 514 A1**
(43) Date of publication of application: **12.08.2009**
(21) Application number: 08163536.9
(22) Date of filing: 02.09.2008
(51) Int. Cl.: G06F 13/40

(54) **Fiber-optic to USB ethernet converter**

(30) Priority: 31.01.2008 TW 97202113 U
(71) Applicant: Optoway Technology Inc., Hu Kou, Hsin Chu Industrial Park Hsin Chu (TW)
(72) Inventor: Chen, Wei-Wen, Hsinchu City 300 (TW)
(74) Representative: Lermer, Christoph

(57) **Abstract**

A fiber-optic to USB Ethernet converter 20 includes fiber-optic jacks 30 for connecting to optical cables; a USB connecting end 40 for plugging into a USB connector on a computer device 2; a USB-Ethernet converting module 60 for converting USB serial electric signal format into Ethernet electric signal format and Ethernet electric signal format into USB serial electric signal format; an optical-electric signal converting circuit 50 for converting the Ethernet electric signal format received from the USB-Ethernet converting module 60 into an optical signal for sending out via one optical cable, and converting an optical signal received from one optical cable into the Ethernet electric signal format for sending back to the USB-Ethernet converting module 60; and a power supply detecting and converting module 70 connected to first and fourth pins in the USB connecting end 40 to acquire and convert +5V DC into 5V or 3.3V for use by the optical-electric signal converting circuit 50 and the USB-Ethernet converting module 60.

## Description

### FIELD OF THE INVENTION

The present invention relates to a fiber-optic to USB Ethernet converter, and more particularly to a fiber-optic to Ethernet converter that includes a universal serial bus (USB) connector for connecting to a mating USB connector on a computer device.

### BACKGROUND OF THE INVENTION

Due to advancement in communication technologies, the broadband communication network has been developed from the conventional electric-signal network for electric signal transmission to the present fiber-optic network for optical signal transmission. The use of fiber-optic network provides a lot of advantages, such as no electromagnetic interference (EMI), low transmission loss, suitable for long-distance transmission, high signal transmission capacity, etc. The only disadvantage of the fiber-optic network is the high unit cost thereof. However, it is predictable the cost for the fiber-optic network would become lower than that of the electric-signal network when the popularization rate of the fiber-optic network is increased. Therefore, most of the advanced countries in the world aim at the fiber-optic network and consider the same as a main frame in the development of future network transmission.

The fiber-optic network currently available as a transmission medium is controlled at a central office (CO) end, such as the Telecommunications Board in Taiwan, and is normally used in long-distance broadband transmission. To connect a fiber-optic network to a customer premises, the fiber-optic network must first be converted into telecommunication lines for linking to premises in which the customers reside or work. The telecommunication lines are then further converted into Ethernet via a modem or a switch for connecting to computers or hubs at the customer premises.

Currently, there are already many business subscribers and community or building resident subscribers of fiber-optic network. In the case these subscribers have already had their premises equipped with fiber-optic network or Ethernet, the fiber-optic network provided by the CO end can be directly converted into the Ethernet and connected to the computers, hubs, switches, switch hubs, or routers at the customer premises. In this manner, increased transmission rate, lowered transmission loss, and reduced transmission cable conversion cost can be achieved.

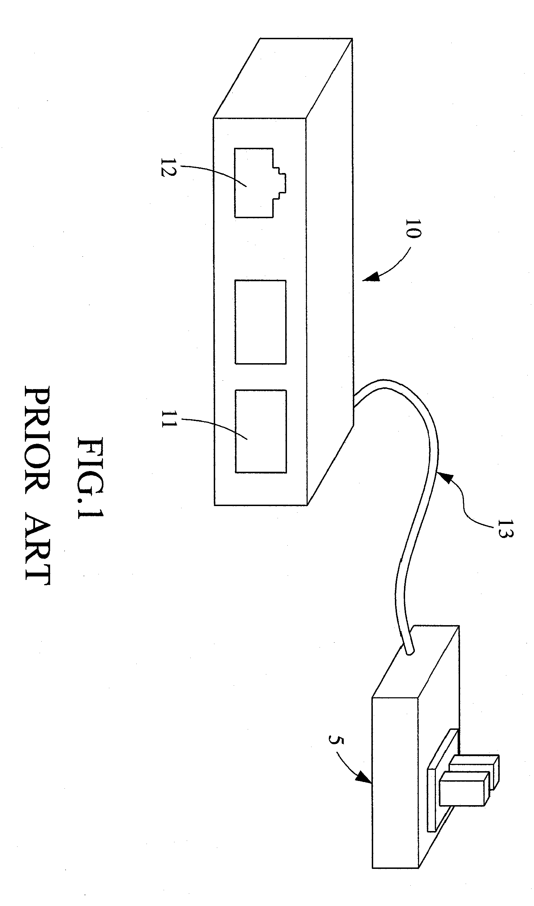

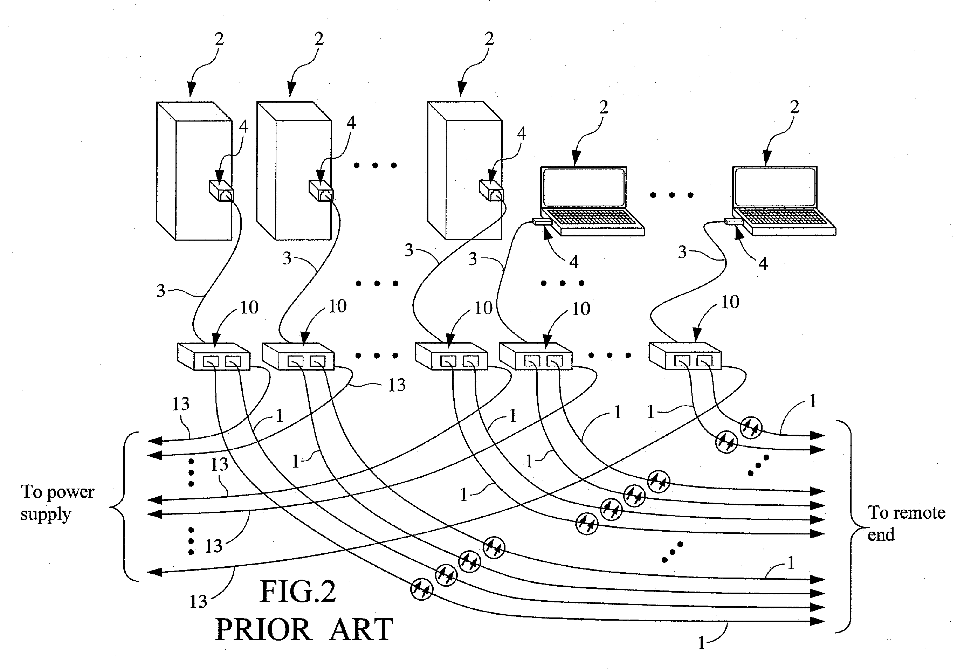

Fig. 1 is a perspective view of a conventional fiber-optic to Ethernet converter 10, and Fig. 2 is a conceptual view showing the connection of USB Ethernet cards 4 to the conventional fiber-optic to Ethernet converters 10 of Fig. 1. As shown, the conventional fiber-optic to Ethernet converter 10 is provided with one or more fiber-optic connecting ports 11, an Ethernet connecting port 12, and a power cord 13. The fiber-optic connecting ports 11 can include at least one fiber-optic receiving jack and at least one fiber-optic transmitting jack for optical cables 1 from the CO end or a remote network device to plug thereinto. The Ethernet connecting port 12 can be an RJ-45 jack. When it is desired to further link the optical cable 1 to a USB connecting port on a local computer device 2, such as a desktop computer, a notebook computer, or a computer server, a network cable 3 is required for connecting the converter 10 to an RJ-45 jack on a USB Ethernet card 4 and then connect the USB Ethernet card 4 to the USB connecting port on the computer device 2. Meanwhile, the power cord 13 must be connected to a power adapter 5, so that alternating current (AC) of commercial electricity can be converted into direct current (DC) for supplying electric power needed by the fiber-optic to Ethernet converter 10.

From the above description, it can be found every fiber-optic to Ethernet converter 10 must be connected to at least two optical cables 1, one network cable 3, one USB Ethernet card 4, and a power cord 13. When a plurality of fiber-optic to Ethernet converters 10 is used at the same time, many problems would occur, such as requiring too many complicated wirings, forming an expanded volume, and requiring additional power adapters 5.

It is therefore tried by the inventor to solve the above problems by developing a small-volume device that combines a USB Ethernet card with a fiber-optic to Ethernet converter and does not require external power supply, and can therefore have simplified wiring to reduce the manufacturing cost of the converter and in turn advantageously enable quick popularization of the fiber-optic network.

### SUMMARY OF THE INVENTION

A primary object of the present invention is to provide a fiber-optic to USB Ethernet converter for using with an optical cable and a local computer device, so as to convert an optical signal carried by an optical cable into a USB serial electric signal format and convert a USB serial electric signal into an optical signal.

Another object of the present invention is to provide a fiber-optic to USB Ethernet converter that acquires needed electric power via a USB connecting end thereof, and therefore enables simplified wiring thereof.

To achieve the above and other objects, the fiber-optic to USB Ethernet converter according to the present invention includes one or more fiber-optic jacks for one or more optical cables to plug thereinto; a USB connecting end for connecting to a computer device; a USB-Ethernet converting module for converting a USB serial electric signal format into an Ethernet electric signal format and an Ethernet electric signal format into a USB serial electric signal format; an optical-electric signal converting circuit for converting the Ethernet electric signal format received from the USB-Ethernet converting module into an optical signal for transmitting via the optical cable, and for receiving an optical signal delivered by the optical cable and converting the received optical signal into the Ethernet electric signal format for transmitting back to the USB-Ethernet converting module; and a power detecting and converting circuit having an input end connected to the USB connecting end to acquire +5V DC from the first and the fourth pin at the USB connecting end, and converting the +5V DC into 5V or 3.3V for supplying to the optical-electric signal converting circuit and the USB-Ethernet converting module.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a perspective view showing a conventional fiber-optic to Ethernet converter;
Fig. 2 is a conceptual view showing the connection of USB Ethernet cards to the conventional fiber-optic to Ethernet converters of Fig. 1;
Fig. 3 is a perspective view of a fiber-optic to USB Ethernet converter according to the present invention;
Fig. 4 is a conceptual view showing an example of connecting the Fiber-optic to USB Ethernet converters of the present invention to different computer devices; and
Fig. 5 is a block diagram of the fiber-optic to USB Ethernet converter according to the present invention.

### DETAILED DESCRIPTION OF THE PREFERRED EMBODIMENTS

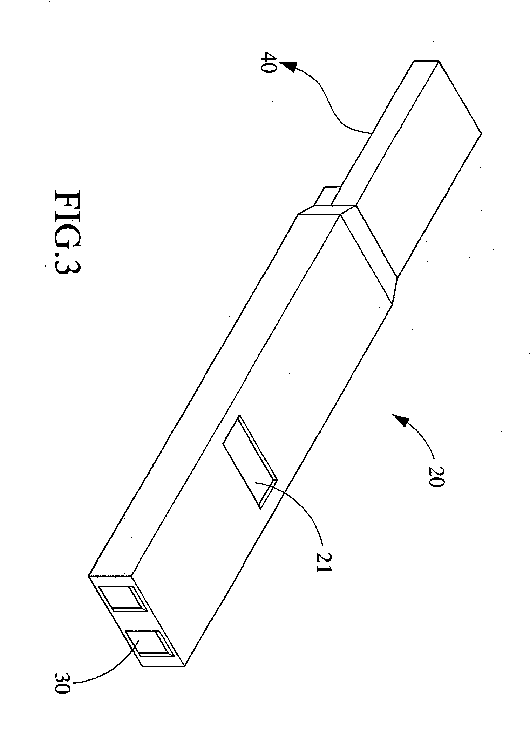

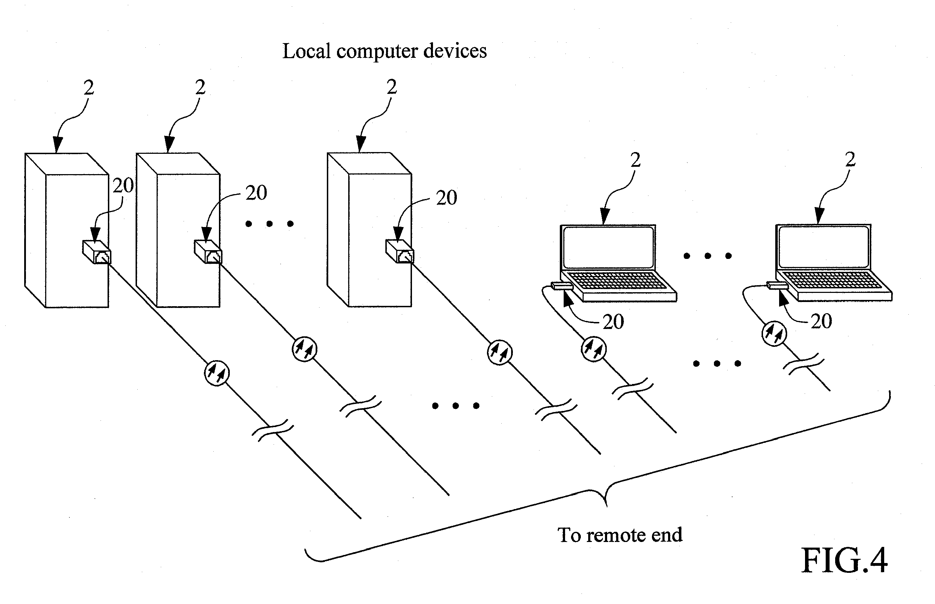

Please refer to Fig. 3 that is a perspective view of a fiber-optic to USB Ethernet converter 20 according to the present invention, and to Fig. 4 that is a conceptual view showing an example of connecting multiple fiber-optic to USB Ethernet converters of the present invention to different computer devices. As shown on Fig. 3, the fiber-optic to USB Ethernet converter 20 according to the present invention externally includes one or more fiber-optic jacks 30, a USB connecting end 40, and an inspection and detection window 21. The fiber-optic jacks 30 can be at least 1-fiber port. Typically 1-fiber port fiber-optic jacks 30 can have both fiber-optic transmitting and receiving function in 1-fiber port by using WDM (wavelength-division multiplexing) technology; while 2-fiber port fiber-optic jacks 30 can have both fiber-optic transmitting and receiving function in each fiber port by using WDM technology, or have fiber-optic transmitting function in one port and receiving function in the other port. The rest may be deduced by analogy. The USB connecting end 40 can be a USB male connector for plugging into a mating USB female connector on a computer device 2. The computer device 2 can be a desktop computer, a notebook computer, a computer server, or the like. The inspection and detection window 21 is used as a testing contact point for a fiber-optic detector to connect thereto. The operating condition of the fiber-optic to USB Ethernet converter 20 can be inspected and detected via the inspection and detection window 21.

As can be seen from Fig. 4, the network cable 3, the power cord 13, the power adapter 5, and the USB Ethernet card 4 in the conventional fiber-optic to Ethernet converter 10 are omitted from the fiber-optic to USB Ethernet converter 20 of the present invention to largely simplify the wiring of the present invention. Moreover, the present invention is not relied on an external power supply, and it acquires power supply from a USB connector. It is known that a standard USB connector includes a first pin, at where a DC voltage of +5V is supplied. Therefore, in the present invention, this +5V DC voltage is converted into the power needed by the fiber-optic to USB Ethernet converter 20 to operate.

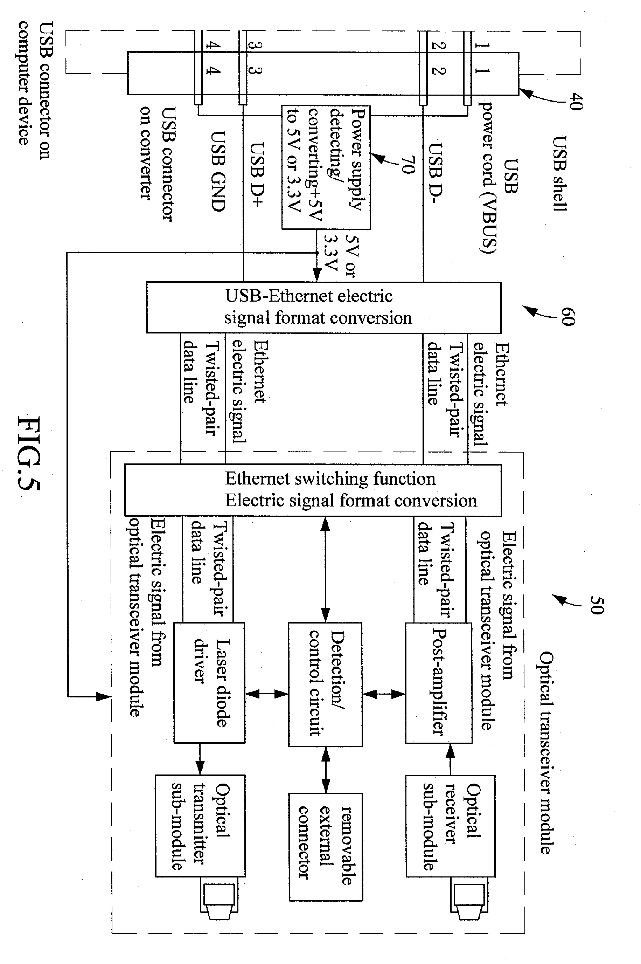

Please refer to Fig. 5 that is a block diagram of the fiber-optic to USB Ethernet converter 20 according to the present invention. As shown, the fiber-optic to USB Ethernet converter 20 internally includes an optical-electric signal converting circuit 50 for signal conversion between a fiber-optic network and an Ethernet network. The optical-electric signal converting circuit 50 is the same as a generally known converter circuit. The present invention is different from the conventional fiber-optic to Ethernet converter 10 mainly in that it internally includes a USB-Ethernet converting module 60 and a power supply detecting and converting module 70. The USB-Ethernet converting module 60 is mainly used to convert an Ethernet electric signal format into a USB serial electric signal format.

As can be seen from Fig. 5, the power supply detecting and converting module 70 has an input end connected to the USB connecting end 40, and the USB connecting end 40 has a first pin supplying a DC voltage of +5V and a fourth pin serving as a ground. Therefore, the power supply detecting and converting module 70 is able to acquire the +5V DC from the first pin of the USB connecting end 40 and converts the +5V DC into 5V or 3.3V for supplying to the optical-electric signal converting circuit 50 and the USB-Ethernet converting module 60. With this power supply, the USB-Ethernet converting module 60 is able to convert USB serial electric signal format transmitted from the USB connecting end 40 into Ethernet electric signal format, and the optical-electric signal converting circuit 50 is able to convert the Ethernet electric signal into an optical signal, which is then sent out via an optical fiber. Meanwhile, the optical-electric signal converting circuit 50 is able to receive optical signal transmitted from an optical fiber and convert the received optical signal into an Ethernet electric signal format, and the USB-Ethernet converting module 60 is able to convert the Ethernet electric signal format into the USB serial electric signal format, which is then transmitted back to the USB connecting end 40.

The fiber-optic to USB Ethernet converter 20 of the present invention is small in volume and has a high-density configuration enabling plug and play, and is therefore a convenient and economical means for providing extended data and signal transmission distance to facilitate the popularization of the fiber-optic network. Therefore, the technical means provided by the present invention is novel and practical for use.

## Claims

1. A fiber-optic to USB Ethernet converter 20 for connecting optical cables to a local computer device 2, comprising:
one or more fiber-optic jacks 30, to each of which one of the optical cables is connected;
a USB connecting end 40 for plugging into a mating USB connector on the local computer device 2;
a USB-Ethernet converting module 60 being electrically connected to the USB connecting end 40 for converting a USB serial electric signal format into an Ethernet electric signal format and converting an Ethernet electric signal format into a USB serial electric signal format;
an optical-electric signal converting circuit 50 being electrically connected to the fiber-optic jacks 30 and the USB-Ethernet converting module 60 for converting the Ethernet electric signal format received from the USB-Ethernet converting module 60 into an optical signal, which is then sent out via the optical cable, and for converting an optical signal received from the optical cable into the Ethernet electric signal format, which is then transmitted back to the USB-Ethernet converting module 60; and
a power supply detecting and converting module 70 having an input end connected to a first pin and a fourth pin in the USB connecting end 40 to acquire a +5V DC, and converting the +5V into 5V or 3.3V for supplying to the optical-electric signal converting circuit 50 and the USB-Ethernet converting module 60.

2. The fiber-optic to USB Ethernet converter 20 as claimed in claim 1, wherein the computer device 2 can be any one of a desktop computer, a notebook computer, and a computer server.

3. The fiber-optic to USB Ethernet converter 20 as claimed in claim 1, wherein the USB connecting end 40 is a USB male connector for connecting to a mating USB female connector on the computer device 2.

4. The fiber-optic to USB Ethernet converter 20 as claimed in claim 1, further comprising an inspection and detection window 21, which serves as a test contacting point for a fiber-optic detector to connect thereto, so that an operating condition of the fiber-optic to USB Ethernet converter 20 can be inspected and detected via the inspection and detection window 21.
